Europäisches Patentamt

European Patent Office

Office européen des brevets

(11) Publication number: **0 149 467**
A1

## (12) EUROPEAN PATENT APPLICATION

(21) Application number: 85100177.6

(22) Date of filing: 10.01.85

(51) Int. Cl.⁴: **F 03 D 7/02**

(30) Priority: 16.01.84 IT 6703284

(43) Date of publication of application:
24.07.85 Bulletin 85/30

(84) Designated Contracting States:
FR GB NL SE

(71) Applicant: FIAT AVIAZIONE S.p.A.
Via Nizza, 312
I-10127 Torino(IT)

(72) Inventor: Calovolo, Mario
Piazza Montanari, 166
I-10100 Torino(IT)

(74) Representative: Prato, Roberto et al,
c/o Ingg. Carlo e Mario Torta Via Viotti 9
I-10121 Torino(IT)

(54) Wind motor provided with a device for its automatic alignment with the wind.

(57) The wind motor (1) is of the type comprising a rotor (2) with a swivel-mounted hub carried by a nacelle (5) on which a sensor (8) for the yaw angle (δ) is disposed upwind of the rotor (2); first means (15, 19) enable the cyclic pitch of the rotor (2) to be set and varied continuously by differentially varying the setting angles of the blades (3), and, when a yaw angle exceeding a predetermined value is sensed, second means (29, 35) under the control of the sensor (8) then control the first means in such a manner as to cause the plane or rotation of the rotor (2) to rotate relative to the nacelle (5) by aerodynamic effect, in a direction concordant with the yaw angle (δ).

Fig.1

./...

Fig.2

WIND MOTOR PROVIDED WITH A DEVICE FOR ITS AUTOMATIC ALIGNMENT
WITH THE WIND

This invention relates to a wind motor, in particular for operating
an electrical generator, provided with an improved device for its
automatic alignment with the wind.
Wind motors usually comprise a rotor with opposing blades, a nacelle
carrying the rotor and disposed rotatable on the top of a tower
or pylon of suitable height, and a hub which connects together the
rotor blades and is either rigid or, preferably, swivel-mounted,
ie able to allow the rotor to make limited rotations about the
nacelle axis in the horizontal plane. To obtain maximum efficiency
from said wind motors or aeromotors (which are also known as aerogenerators when they drive an electrical generator for electricity
production) it is known to be necessary to maintain the plane of
rotation of the rotor substantially perpendicular to the wind
direction, and thus various devices have been developed for keeping
the aeromotor or aerogenerator constantly aligned with the wind,
by causing the nacelle to rotate on its support during a "wind
change" (ie a change in the wind direction on the site on which the
aeromotor is located). The most simple of these devices, which
can be used with good effectiveness only for small aerogenerators,
is constituted by a tail rudder which is mounted on the nacelle
at the opposite end to the rotor. This system is hardly effective
for aerogenerators with a power exceeding a few tens of a kilowatt,
and the relatively large dimensions required for the tail rudder
are such that the cost, weight and overall size of the system are unacceptable, and thus automatic wind alignment systems of the so-called "active" type have been constructed, in the form of motorised devices controlled by means sensitive to the yaw angle.

In the description given hereinafter the term "yaw angle" signifies the angle between the longitudinal axis of the nacelle and the wind direction, ie the angle of deviation of the nacelle from the position in which it would be aligned with the wind.

One of the known "active" systems consists of at least one pair of propellers of horizontal axis arranged to rotate in planes perpendicular to the plane of rotation of the rotor, and disposed on opposite sides of the nacelle carrying the rotor. These propellers are arranged for operation by any wind component transverse to the nacelle, and are therefore operated only when this latter is not coaxial with the wind, ie when the yaw angle is other than zero.

Such propellers are connected by a train of step-down gears to a worm which engages with a helical gear rigid with the tower which supports the nacelle. Consequently when the wind changes, it produces a non-zero transverse component, which by operating the propellers causes the worm to rotate, which then rotates the nacelle about the tower in such a direction as to nullify the yaw angle. Apart from its relatively high cost and constructional complexity, this system has the drawback of correcting the nacelle direction too slowly.

One object of the present invention is to provide a wind motor, in particular for driving an electrical generator, of the type comprising a rotor with a swivel-mounted hub and a device for automatic alignment with the wind, which is of high efficiency and relatively low cost, and is able to prevent any impact against the limit stops and/or loss of power of the rotor. A further object of the present invention is to provide a wind motor comprising a device for its automatic alignment with the wind which acts in a reduced time.

The said objects are attained according to the present invention by a wind motor, in particular for operating an electrical generator, of the type comprising a rotor with a swivel-mounted hub, a nacelle carrying said rotor, and a device for automatically aligning said nacelle with the wind in order to keep the plane of rotation of the rotor substantially perpendicular to the wind direction, characterised in that said alignment device comprises:

- a wind direction sensor disposed upwind of said rotor and arranged to continuously sense the yaw angle of the nacelle;

- first means for setting and varying the cyclic pitch of said rotor by differential variation of the setting angle of the blades thereof; and

- second means which, when a yaw angle exceeding a predetermined value is sensed by said sensor, cause the first means to operate in such a manner as to make said plane of rotation of the rotor rotate about a substantially vertical axis in the same direction as that of the angular displacement undergone by the wind direction which has defined the yaw angle sensed by said sensor.

The present invention will be more apparent from the non-limiting description of one embodiment thereof given hereinafter with reference to the accompanying drawings, in which:

Figure 1 is a diagrammatic illustration of the operation of an aerogenerator constructed in accordance with the present invention;

Figure 2 is a diagrammatic illustration of the automatic wind alignment device of the aeromotor according to the present invention; and

Figure 3 is a section on the line III-III of the device of Figure 2.

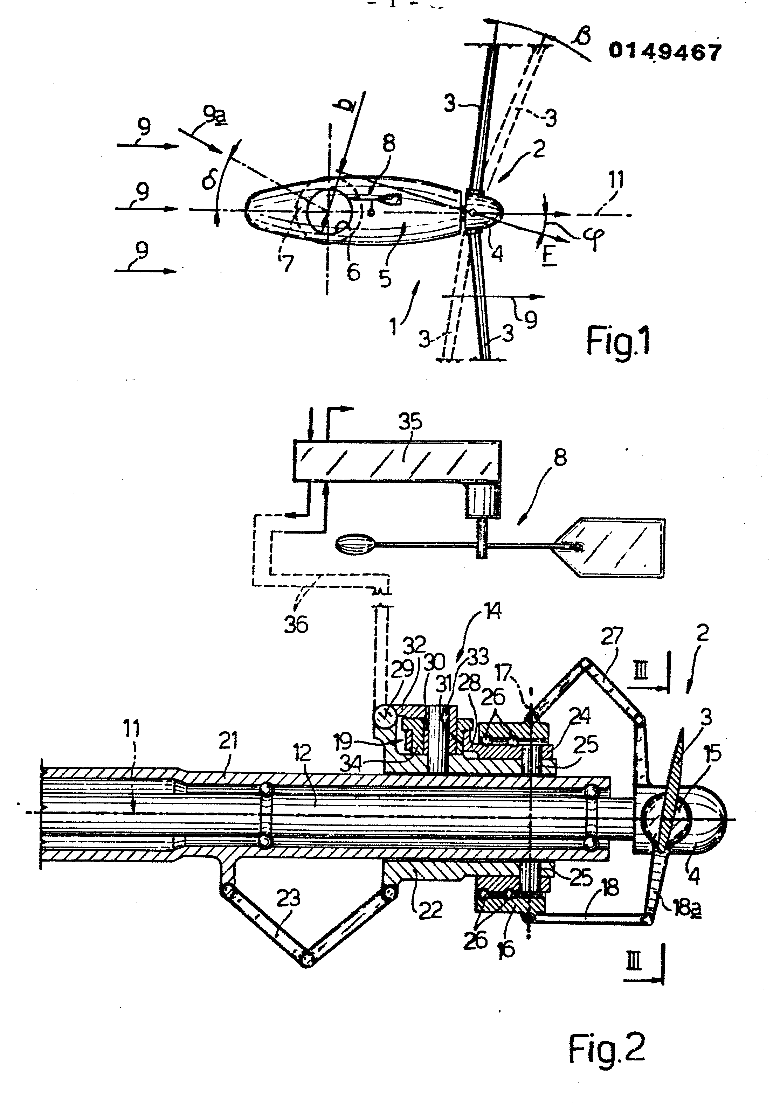

In Figure 1, the reference numeral 1 indicates overall a wind motor of the type comprising a rotor 2 with two opposing blades 3 and a swivel-mounted hub 4, a nacelle 5 mounted rotatable at 6 on the top of a tower 7, and a device for automatically aligning the nacelle 5 with the wind, this device being not visible in that it is preferably housed inside said nacelle 5 and/or hub 4, and of which only a wind direction sensor 8 can be seen disposed on the nacelle 5 upwind of the rotor 2, so as to be able to continuously sense, before the wind strikes the blade 3, the yaw angle $\delta$ of the nacelle 5 to the wind direction, indicated by the arrows 9 (by which the nacelle 5 is aligned with the wind direction, and thus the angle $\delta$ is zero) and 9a (by which the nacelle 5 is out of alignment with the wind direction following a "wind change", ie a change in the direction thereof). The sensor 8 is of known type substantially of arrow configuration, and is therefore not described for simplicity.

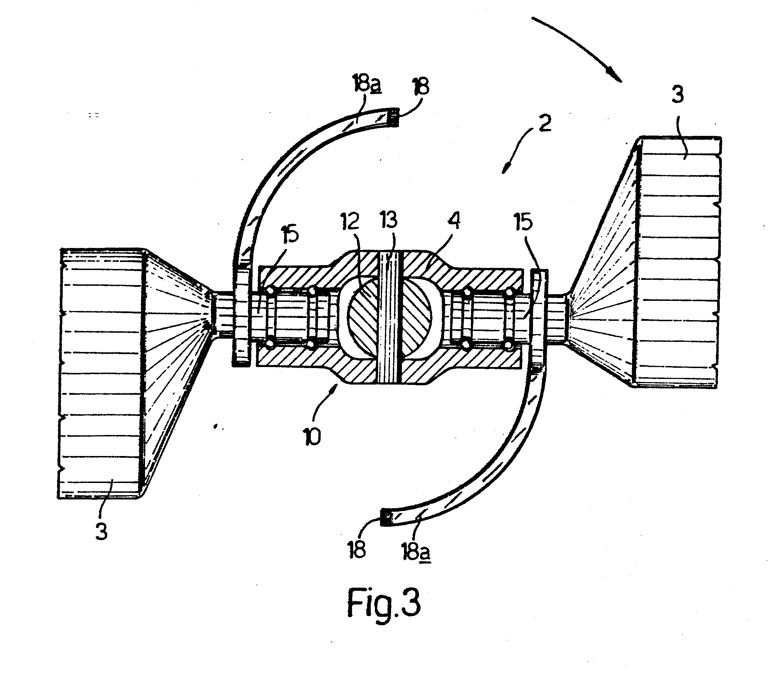

In Figure 3, the reference numeral 10 indicates a coupling of known type, which enables the axis of the swivel-mounted hub 4, which coincides with the axis of rotation of the rotor 2, to undergo an angular displacement, at least along an arc of predetermined amplitude, about the axis of rotation 11 of a shaft 12 to which the rotor 2 is fixed. The axis 11 coincides with the longitudinal axis of the 5, and the coupling 10 is arranged to transmit the drive torque from the rotor 2 to the shaft 12, which is arranged to operate, for example, an electrical generator housed inside the nacelle 5. In particular, the coupling 10 comprises a pin 13 inserted transversely through the shaft 12 and disposed perpendicular to the axis 11, on said pin 13 there being rotatably pivoted the hub 4, which is of forked configuration.

With reference also to Figure 2, the rotor 2 of the wind motor according to the invention is of the type comprising variable pitch blades 3, and said automatic wind alignment device comprises, in addition to the sensor 8, a mechanical device 14 for setting and varying the cyclic pitch of the rotor 2. In particular, the blades 3 are supported by respective thrust bearings 15 mounted rotatable on the swivel-mounted hub 4 so as to be able to rotate about an axis substantially transverse to the axis of rotation thereof, so as to vary the setting angle of the blades 3, and the device 14 is arranged to determine a cyclic pitch of the rotor 2 with a horizontal nodal axis, and comprises an oscillating element 16 mounted coaxially and angularly rigid with the rotor 2, support means for the element 16 arranged to enable it to swivel about a substantially vertical axis 17 which is substantially perpendicular to the axis of rotation of the rotor 2, articulated transmission elements preferably constituted by a connecting rod 18 for each blade 3 and arranged to peripherally connect the element 16 to the respective thrust bearings 15, and a mechanical control device 19 of irreversible type, arranged to cause the element 16 to rotate about said support means. In the embodiment illustrated in Figure 2, the shaft 12 is housed rotatable inside a tubular support frame 21 forming part of the nacelle 5 or rigidly fixed thereto, and thus fixed with respect to the rotational movement of the rotor 2 about its axis. On the frame 21 there is slidably mounted a sleeve 22, which is made angularly rigid with the frame 21 by means of an articulated element 23, and which is therefore fixed with respect to the rotational movement of the rotor 2. On the sleeve 22 there is mounted a ring 24 which swivels about the axis 17 and is pivoted to the sleeve 22 by means of a pair of vertical pins 25 coaxial with the axis 17. Said oscillating element 16 is idly mounted on the ring 24 by way of rolling bodies 26, and in the illustrated example is constituted by a further ring coaxial with the ring 24 and having the connecting rods 18 hinged to its periphery. A further articulated element 27, similar to 23, makes the ring 16 angularly rigid with the rotor 2 while allowing it to undergo axial translatory movements together with the sleeve 22. The ring 24 is provided with an arm 28 rigid therewith and projecting axially therefrom, said arm 28 engaging the control device 19, which is also carried by the sleeve 22. The axial translation of this latter is controlled by known devices, not shown for simplicity, governed by the control system for the collective pitch of the rotor 2, of known type and not shown for simplicity. From the aforegoing, it is apparent that if the sleeve 22 is made to translate along the frame 21, the setting angle of the blades 3 changes by identical values, thus enabling the collective pitch of the rotor 2 to be controlled, so as to regulate the power delivered thereby, whereas by rotating the ring 24 about the pins 25, it is apparent that the ring 16 is made to rotate about the axis 17 and thus move through opposing distances the connecting rods 18 controlling the setting angle of the blades 3 when said connecting rods 18 are contained in a horizontal plane passing through the axis 21, thus causing the setting angle of the blades 3 to vary differently when these are disposed vertically. In this respect, according to the invention and as shown in Figure 3 the connecting rods 18 are hinged to the blades 3 by way of curved appendices 18a of the thrust bearings 15, which are configured in such a manner as to position the connecting rods 18 with a phase lead of 90° over the blades 3 with respect to the direction of rotation of the rotor 2, indicated by the arrow in Figure 3. In this manner, a cyclic pitch with a horizontal nodal axis is set on the rotor 2, ie a continuous variation of the setting angle of the blades 3 is obtained as a function of their angular position about the axis of the hub 4, between a position of maximum phase difference between the setting angles of the opposing blades 3 when these are vertical, and a position of substantially zero phase difference when these are disposed horizontally. It is also apparent that by varying the angle of rotation or swivel of the ring 16 about the axis 17, the cyclic pitch of the rotor 2 can be consequently varied continuously at will, ie the extent of the phase difference in the setting angle of the opposing blades 3 when in their vertical position can be varied at will.

According to the invention, the direction and extent of the rotation of the ring 16 about the axis 17 and consequently the sign and extent of the cyclic pitch modulation are controlled by the device 19, which comprises a double-acting cylinder-piston unit 29, a cam 30 housed in a seat 31 provided in the arm 28 and connected by a radial arm 32 to the cylinder-piston unit 29, and a pin 33 inserted into the sleeve 22 and by means of which the cam 30 is rotatably connected to said sleeve. Clearly, on operating the cylinder-piston unit 29 the cam 30 is caused to rotate in the seat 31, consequently rotating the ring 24 and the relative coaxial ring 16 about the axis 17, to produce the required variation in the cyclic pitch of the rotor 2.

According to the invention, the device 19 also comprises a second cam 34, the purpose of which is to correct the aerodynamic effects due to the atmospheric boundary layer and which, according to the invention, idly carries said cam 30 in its interior and is itself idly housed in the seat 31. Said cam 34 is arranged to be rotated manually by an operator and/or by means of a suitable servo control of any known type, not shown for simplicity, and enables a cyclic pitch of constant predetermined value to be set independently of the operation of the cylinder-piston unit 29, by virtue of the fact that, in a like manner to the rotation of the cam 30, its rotation produces a rotation of the entire assembly constituted by the rings 24 and 16 on the pins 25. Finally, the automatic alignment device according to the invention comprises a slide valve 35, for example of any known spool type, arranged to feed fluid under pressure to the cylinder-piston unit 29 through suitable pipes 36 indicated by dashed lines, from a suitable source of pressurised fluid, constituted for example by the hydraulic circuit of the aeromotor 1. The spool of the slide valve 35 is controlled directly by the rotation of the sensor 8, and according to the invention the slide valve 35 is arranged to operate the cylinder-piston unit 29 in such a manner as to cause the cyclic pitch of the rotor 2 to vary by an amount of such a sign and value as to cause the blades 3 to flap by

aerodynamic effect about the shaft 12 and the relative axis 11 by the same sign as the sign of the yaw angle $\delta$ sensed by the sensor 8, so as to cause the plane of rotation of the rotor 2 to rotate about a vertical axis in the same sense as that in which the wind direction has rotated in order to define the angle $\delta$. In order to give stability to the control system in the case of small and rapid variations in the wind direction, the sensor 8 is obviously provided in known manner with a degree of insensitivity of predetermined value, so that it controls the operation of the cylinder-piston unit 29 only on sensing a yaw angle exceeding a predetermined value.

The operation of the wind motor according to the invention will now be described with reference to Figure 1. When in its normal running state, the aeromotor 1 of the invention has the configuration shown in Figure 1, with the nacelle 5 coaxial to the wind direction 9, the yaw angle $\delta$ equal to zero and the rotor 2 upwind of the support tower 7 and coaxial to the wind direction 9 and to the axis 11 of the shaft 12 and nacelle 5, with consequent substantially zero flapping of the blades 3. If a "wind change" now takes place in a clockwise direction and the new wind direction is 9a, this will no longer be coaxial to the nacelle 5, but will form a positive yaw angle $\delta$ to the axis 11. This wind change is immediately sensed by the sensor 8, both because of its position upwind of the rotor 2, and because of its reduced mass, and it therefore rotates in a clockwise direction until it is coaxial to the new wind direction. If the angle of rotation of the sensor 8 exceeds said predetermined value (for example ± 10°) said displacement causes the spool of the slide valve 35 to move so that this latter feeds pressurised fluid to the cylinder-piston unit 29, to cause the ring 16 to rotate in the manner heretofore described in such a direction as to differentially vary the setting angle of the opposing blades 3, and consequently vary their incidence so as to reduce the lift of the upper blade 3 and in contrast increase the lift of the lower blade 3 when these latter are positioned vertically. In this manner, the blades 3 become set to receive the wind in the new direction 9a, so preventing this wind change inducing on the rotor 2 an aerodynamic moment such as to cause this latter to rotate on the pin 13 in an anticlockwise direction about the tower 7 (as would have happened if the cyclic pitch was not varied) with the risk of violent impact against the limit stops of the hub 4 (of known type and not shown for simplicity). According to the invention, the variation in the cyclic pitch of the rotor 2 controlled by the rotation of the sensor 8 is of such an extent as to not only produce the aforesaid effect, but indeed to induce on the rotor 2 an aerodynamic moment acting in a horizontal plane and directed in a clockwise direction (ie concordant with the direction of the "wind change") so as to cause the axis of rotation of the rotor 2 and of the relative hub 4 to undergo an angular displacement such as to form in the horizontal plane an angle $\phi$ between the axis 11 and the perpendicular to the plane of rotation of the rotor 2 (Figure 1) which is concordant with the yaw angle $\delta$. This is possible in that a mathematical analysis of the parameters which determine the lift of the blades 3 shows that this lift can be expressed as a linear second order function of the flap angle $\beta$ of the blades 3 (Figure 1), namely:

$$a\ddot{\beta} + b\dot{\beta} + c\beta = d \qquad\qquad (1)$$

where a, b, c and d are constants characteristic of the machine,
and $\ddot{\beta}$ and $\dot{\beta}$ are the second and first derivatives of the angle $\beta$.
Developing (1) and taking account of the fact that $\beta$ is a function
of the angular position of the blades 3 and of the modulation of
the cyclic pitch, it can be shown that the rotor 2 suffers
the effects which disturb the lift of the blades 3 (such as a wind
change or cyclic pitch variation) with a delay of 90° with respect
to the position of the blades 3 at the moment in which the disturbance
has occurred. It is therefore apparent that the effect of any change
in the incidence of the blades 3 to the wind which takes place when
these are vertical is felt in the horizontal plane after the blades
have rotated through 90°. As the member which controls the position
of the blades 3 (connecting rods 18) is disposed substantially 90°
in advance of the blades, as heretofore stated, it is clear that
when the blades reach the vertical plane they are already set to
receive the wind from the direction 9a with an angle of incidence
such as to produce, after a further 90°, and thus when in the horizontal plane, the said aerodynamic moment which enables the plane
of rotation of the rotor 2 to be rotated concordantly with the wind
rotation, so as to keep it constantly perpendicular to this latter.
The clockwise rotation of the rotor 2 also generates on the nacelle
5 a couple having an arm b and a value of F x b, where F is the
axial thrust on the rotor 2 due to the wind and b is the distance
between the straight line along which F acts when the rotor 2 rotates,
and the centre of rotation 6 of the nacelle 5. By virtue of this
couple, the nacelle 5 is caused to rotate in a clockwise direction until the yaw angle $\delta$ is nullified, thus automatically realigning the rotor 2 with the wind. In this respect, following the nullifying of the angle $\delta$ the sensor 8 returns to coaxiality with the nacelle 5 to cause the control device 19 to again act and return the cyclic pitch of the rotor 2 to the value which it initially held previous to the wind change, thus enabling the rotor 2 to return by aerodynamic effect as heretofore described to a position coaxial to the nacelle 5, thus also nullifying the angle $\beta$. (In this respect it is apparent that an aerodynamic moment is generated in the opposite direction to the preceding, and such as to return the rotor 2 to coaxiality with the nacelle 5).

The advantages of the aeromotor according to the invention are apparent from the aforegoing description, and modifications can be made thereto without leaving the scope of the present invention. For example, the device for operating the control device 19, instead of being hydraulic, can be of any other known type, for example pneumatic or electric, or even mechanical by directly connecting the rotation pivot of the sensor 8 to the arm 32 which operates the control 19. Instead of being formed with cams, this latter can be formed with any other mechanical device of irreversible type, ie able to cause the ring 24 to rotate and then to remain locked in the assumed position even when forces act thereon such as to urge it to rotate in the opposite direction. Finally, from the description it is apparent that the automatic alignment device according to the invention also allows compensation of the effect of the atmospheric boundary layer on the operation of the aeromotor 1 according to the invention. This effect is known to consist of a disturbance in the lift of the blades when these are in their vertical position, due to the fact that the speed of the wind varies with its distance from the ground, due precisely to the effect of the atmospheric boundary layer in proximity to the ground. It is therefore apparent that by rotating the cam 34 so as to set a constant cyclic pitch of suitable value and sign for the rotor 2, the lift of the upper blade 3 can be reduced and the lift of the lower blade 3 can be increased so as to exactly compensate for the difference in lift between them due to the different speed at which the wind strikes them.

## PATENT CLAIMS

1.      A wind motor (1), in particular for operating an electrical generator, of the type comprising a rotor (2) with a swivel-mounted hub (4), a nacelle (5) carrying said rotor (2), and a device for automatically aligning said nacelle (5) with the wind in order to keep the plane of rotation of the rotor (2) substantially perpendicular to the wind direction, characterised in that said alignment device comprises:

-       a wind direction sensor (8) disposed upwind of said rotor (2) and arranged to continuously sense the yaw angle ($\delta$) of the nacelle (5);

-       first means (15, 19) for varying the cyclic pitch of said rotor (2) by differential variation of the setting angle of the blades (3) thereof; and

-       second means which, when a yaw angle exceeding a predetermined angle is sensed by said sensor (8), cause the first means (15, 19) to operate in such a manner as to make said plane of rotation of the rotor (2) rotate about a substantially vertical axis in the same direction as that of the angular displacement undergone by the wind direction which has defined the yaw angle ($\delta$) sensed by said sensor (8).

2.      A wind motor (1) as claimed in claim 1, characterised in that said rotor (2) has a cyclic pitch with a horizontal nodal axis, and said alignment device comprises means (34) for maintaining a cyclic pitch of constant value such as to compensate for the aerodynamic effects due to the atmospheric boundary layer.

3.      A wind motor (1) as claimed in claim 1 or 2, characterised in that said first means comprise an oscillating element (16) mounted coaxially and angularly rigid with said rotor (2), support means (24) for said oscillating element (16) arranged to enable it to swivel about a substantially vertical axis (17) substantially perpendicular to the axis of rotation of the rotor, articulated transmission elements (18) arranged to connect the periphery of said oscillating element (16) to respective thrust bearings (15) supporting said blades (3), said thrust bearings (15) being mounted on said rotor (2) in such a manner as to be able to rotate about an axis transverse to the axis of rotation thereof, and a mechanical control device (19) of irreversible type arranged to cause said oscillating element (16) to rotate on said support means (24).

4.      A wind motor (1) as claimed in claim 3, characterised in that said articulated transmission elements comprise a respective connecting rod (18) connected to each of said respective blades (3) in a position which is substantially 90° in advance of the position of the respective blade (3) relative to the direction of rotation of said rotor (2).

5.      A wind motor (1) as claimed in claim 3, characterised in that said support means for the oscillating element (16) comprise a ring (24) on which said element (16) is mounted by way of revolving bodies (26), an element (22) which is fixed with respect to the rotational motion of said rotor (2) about its axis, and a pair of pins (25) of substantially vertical axis and by means of which said ring (24) is hinged to said fixed element (22).

6.      A wind motor (1) as claimed in claim 5, characterised in that said control device (19) comprises a first cam (30) housed in a seat (31) provided in an arm (28) rigid with said ring (24) and projecting axially therefrom, and a pin (33) by means of which said cam (30) is idly connected to said fixed element (22).

7.    A wind motor (1) as claimed in claim 6, characterised in that said device (19) further comprises a second cam (34) which in its interior houses said first cam (30) and is itself housed in said seat (31) in said arm (28), said second cam (34) being able to be rotated manually in order to set the cyclic pitch of said rotor (2) by giving the blades (3) a setting angle such as to compensate for the aerodynamic effect of the atmospheric boundary layer.

8.    A wind motor (1) as claimed in one of claims 3 to 6, characterised in that said second means comprise a cylinder-piston unit (29) and a slide valve (35) for feeding pressurised fluid to said cylinder-piston unit (29), this latter being arranged to operate said mechanical control device (19), said slide valve (35) being controlled directly by the movement of said wind direction sensor (8).

Fig.1

Fig.2

Fig.3

0149467
Application number

European Patent
Office

EUROPEAN SEARCH REPORT

EP 85 10 0177

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 372 971 (U. HUTTER) <br> * Figure 1; page 7, line 6 - page 8, line 29 * | 1 | F 03 D 7/02 |
| | --- | | |
| A | GB-A-2 123 488 (J.W. CARTER) <br> * Figure 11; abstract * | 1 | |
| | --- | | |
| A | DE-C- 742 239 (F. DUWE) <br> * Figures; page 2, lines 23-29 * | 1 | |
| | ----- | | |
| | | | **TECHNICAL FIELDS SEARCHED (Int. Cl.4)** |
| | | | F 03 D |

The present search report has been drawn up for all claims

| Place of search | Date of completion of the search | Examiner |
|---|---|---|
| THE HAGUE | 21-03-1985 | THIBO F. |